Europäisches Patentamt

European Patent Office

Office européen des brevets

(11) Publication number: **0 148 382**
**B1**

(12) **EUROPEAN PATENT SPECIFICATION**

(45) Date of publication of patent specification: **06.06.90**

(51) Int. Cl.⁵: **B 01 D 33/06**

(21) Application number: **84114125.2**

(22) Date of filing: **22.11.84**

(54) Method for fiber retrieval from aqueous streams.

(73) Proprietor: **Champion International Corporation**
**One Champion Plaza**
**Stamford Connecticut 06921 (US)**

(72) Inventor: **Fremont, Henry A.**
**550 Laveta Court**
**Wyoming Ohio 45215 (US)**
Inventor: **Stiffler, Mary C.**
**8150 Mellowtone Court**
**West Chester Ohio 45069 (US)**

(74) Representative: **Patentanwälte Müller-Boré,**
**Deufel, Schön, Hertel, Lewald, Otto et al**
**Isartorplatz 6**
**D-8000 München 2 (DE)**

(30) Priority: **23.12.83 US 564720**

(43) Date of publication of application:
**17.07.85 Bulletin 85/29**

(45) Publication of the grant of the patent:
**06.06.90 Bulletin 90/23**

(84) Designated Contracting States:
**DE FR GB IT SE**

(56) References cited:
**EP-A-0 041 251**
**EP-A-0 044 566**
**DE-C- 926 605**
**FR-A-2 384 530**
**US-A-4 001 119**
**US-A-4 370 231**

Courier Press, Leamington Spa, England.

EP 0 148 382 B1

**Description**

Background of the Invention

In the paper industry, a number of mechanical devices are used to separate fiber from water streams including: screens, vacuum filter drums and fourdrinier wires. Foam filters of the type disclosed in EP—A—0 044 566 (U.S. Patent No, 4,310,424) and EP—A—0 041 251 (U.S. Patent No. 4,303,533), assigned to the same assignee as the instant invention, and U.S. Patent No. 4,212,737, also have been suggested for application to such streams. The method according to EP—A—0 041 251 comprises passing such waste stream through at least two contiguous layers of an open celled compressible hydrophobic polymeric foam material and then compressing said layers to remove the solids loaded therein to regenerate the foam layers which are so arranged that the open cells of each layer are randomly oriented. EP—A—0 044 566 utilizes a multiple layer foam filtering element of the same type in combination with a compression unit for regeneration of the layers. The thickness of the contiguous layers is from 100 to 200 mm according to both references.

The regeneration requirements of the foam filters heretofore have prevented such processes from producing desirable fiber consistency and volumetric flow in an efficient manner. These problems have been compounded because in addition to the normal leakage of fiber through the upstream process devices into the mechanical separation device or filter feed stream, occasional breaks and failures occur in the upstream devices which allow relatively large amounts of the pulp to enter the stream.

Depending on the stream feeding the mechanical separation device, consistencies of cellulosic fiber in the normally dilute aqueous suspension of cellulosic pulp can increase to a range of from one-half percent ($\frac{1}{2}$%) to eight percent (8%) during upstream catastrophes. The result of such failures is that downstream equipment, which typically includes pumps, control valves, regulators and other flow control plumbing, which are not designed to handle a high consistency stream, will often eventually fail. Moreover, fiber which is desirable for further papermaking purposes will by-pass the separation process and be lost to the sewer.

Accordingly, there has been an unfulfilled need for an efficient method of continuously treating normally dilute aqueous solutions of cellulosic pulp which routinely flow from the pulpmaking or papermaking process devices to effect separation and retrieval of small amounts of desirable high consistency fiber therefrom while letting small contaminants and undesirable fiber parts flow through to the sewer and also to effect retrieval of desirable high consistency fiber during periods of high fiber loading which result from upstream catastrophic failures.

The present invention is directed to an efficient method of treating a stream of waste water from pulp making or paper making processes which process accomplishes this previously unfulfilled need and enables to recover desirable fiber with maximization of the volumetric flow through the filter and minimization of the buildup of solid material on the filter surface.

In accordance with the invention this is accomplished by utilizing a filter element which is composed of a single thin layer of open cell foam material having specific properties as defined in the claims.

Brief description of the invention

An efficient method of treating normally dilute aqueous suspensions of cellulosic pulp, which are occasionally highly loaded with fiber, to effect separation and retrieval of desirable fiber at high consistency from small contaminants and undesirable fiber parts in the suspension surprisingly has been discovered from observations and analysis of hydrophobic foam separation medium characteristics and behavior. In particular, the electrostatic and capillary behaviour of open cell hydrophobic foam within certain thickness and porosity ranges has been determined to have the required separation versatility necessary efficiently to retrieve desirable fiber both routinely and during catastrophic loadings.

When open cell hydrophobic foam separation media of thicknesses within the range of from about 3 mm ($\frac{1}{8}$ inch) to about 50 mm (2 inches) and porosities within the range of from about 16 to 32 pores/cm (40 to 80 pores per lineal inch or ppi) are used to provide a separation treatment on streams of dilute aqueous suspensions of cellulosic pulp with occasional high fiber loads, the advantageous versatility of the foam media provides efficient separation and retrieval of desirable fiber. This capability has been demonstrated on process sewer streams and is suited for use on various streams within the papermaking process such as on the weak black liquor stream; as a replacement for the brown stock washers (in the final stage where fiber consistency is raised) or as "deckers" for pulp thickening; in the bleachery sewer where it can be used to produce light pulp sheets or as a separate pretreatment step in the bleaching process to reduce chemicals required when excess bark, shives, dirt and other contaminants pass through the digesters and washers. It can be used any place there are diffusion washers, for example, on the dark pulp main process stream between the wash and screen devices. The real goal is to reclaim a fiber mat of desirable fiber and of high consistency and to permit the rest of the aqueous suspension of small contaminants and fiber parts to pass through the medium with a minimization or elimination of the need for foam medium regeneration.

Comparative data with fourdrinier papermaking screen has shown the surprising results which are believed to be in part attributable to: (1) the minimization of hydraulic electrostatic attachment by triboelectricity of the small contaminants and undesirable fiber parts to open cell hydrophobic foam in the range of thickness of from about 3 to 50 mm and the porosity range of from about 16 to 32 pores/cm; and

2

(2) the capillary driving forces effected by open cell hydrophobic foam of this thickness and porosity range. The capillary action of the medium when used within the discovered advantageous parameters of thickness and porosity is best understood after considering factors discussed in an article by Anthony M. Schwartz in the Vol. 61, No. 1 edition of *Industrial and Engineering Chemistry*, entitled: "Capillarity Theory and Practice."

The tribology and capillarity of about 3 to 50 mm thick open cell hydrophobic foam with about 16 to 32 pores/cm porosity provides advantages which can be stated as follows:

1. Due to the openness of the foam, the feed stream can be filtered continuously at very low vacuum (pressure differential), on the order of about 0—25 cm (0—10 inches) of water as compared to the about 355 cm (140 inches) of water vacuum required by typical papermaking process vacuum filters and fourdriniers.

2. Area flow rates through the foam medium of the invention are extremely high, up to about 1200 l/m²/min (30 gal./ft.m²/min. or GFM) compared to the about 80 to 400 l/m²/min (2—10 gal/ft.m²/min. or GFM) typical of earlier foam separating media.

3. The hydrophobicity of the foam and the relatively small pore size result in the majority of desirable fiber remaining on the foam surface for retrieval without precoating of the surface with a fiber mat as typically is necessary in papermaking filtration for fiber removal.

4. During catastrophic failure, the desirable fiber on the foam surface can be continuously retrieved in high consistency form and stored for later use as wet lap or immediately returned to the process.

The foam medium is provided according to the invention as a single thin layer of open cell compressible hydrophobic foam, e.g. polyurethane, with a thickness of from about 3 to 50 mm ($\frac{1}{8}$ to 2 inch) and a nominal porosity of from about 16 to 32 pores/cm (40 to 80 ppi). Manufacturer's tolerances on porosity typically are plus or minus ten percent ($\pm 10\%$). Other characteristics of the foam are as described in EU—A—0 041 251 and 0 044 566 (U.S. Patent Nos. 4,303,533 and 4,310,424).

A distinct advantage of open cell hydrophobic foam is the efficiency provided by cellular structure in regard to water "takeaway". Slow movement of filtrate results in inefficient use of subatmospheric pressure (vacuum) and is partially responsible for causing incomplete drainage of liquid from a pulp mat. This is explained in U.S. Patent No. 4,370,321. Hydrophobic foam in a porosity range of about 16 to 32 pores/cm and a thickness in a range of about 3 to 50 mm has been found to provide excellent water takeaway when compared to fourdriner wire and thicker foam of greater porosity (ppi).

The process of the invention may include a rotating endless foam belt or drum cover subjected to a pressure differential on opposite sides thereof to produce a driving force for a feed stream. The feed stream is an aqueous suspension which under normal operating conditions contains small amounts of desirable fiber as well as undesirable small fiber parts and small contaminants of dirt and other materials. During catastrophic failure of upstream devices, high consistency fiber is present in the aqueous suspension. In one embodiment, the feed stream is introduced into a tank containing a rotating drum covered with the thin (about 3 to 50 mm) foam medium of about 16 to 32 pores/cm porosity. Because of the pressure differential ($\Delta P$) on opposite sides of the medium, the tribology and the capillarity of the medium, the feed stream leaves the larger desirable fiber, which is the majority of fiber, on the foam surface and passes through the medium, carrying with it any small contaminants and undesirable fiber parts suspended therein. The stream, (filtrate), now separated from the desirable fiber, is withdrawn from the interior of the drum and reused in the papermaking system or discarded as waste in a sewer. The fiber is retrieved by being doctored or vacuumed off the surface of the foam or by a couch roll and returned to the process for reuse.

Air or water showers or a vacuum device can be used to clean the surface of the foam prior to its reintroduction into the tank.

Alternative embodiments of the process of the invention include the use of foam medium belt filters and drum belt washers, the latter acting as the primary separating stage for a pulp dryer.

The subject invention thus provides an on-stream continuously operating, separation device of small relative size and high capacity for recovery of continuing random fiber losses or of high consistency fiber pulp resulting from catastrophic failure of upstream operating equipment. The above is accomplished with a minimum vacuum at low total energy and capital costs.

Brief description of the drawings

Figure 1 is a schematic elevational view of a drum type of foam separation device of the invention with a doctor blade and cleaning showers.

Figure 2 is a view similar to Figure 1 of a drum type of foam separation device of the invention with a couch roll.

Figure 3 is a view similar to Figure 1 of a belt type of foam separation device of the invention.

Figure 4 is a qualitative analysis and theoretical comparison of driving forces believed existent in the foam separation devices of Figures 1 and 2 and in a wire covered drum type pulp thickener.

Figure 5 is a graph of area flow rate in l/m²/min (gal./ft/m²/min) through the foam media of Figure 2 at foam porosities of about 18 pores/cm (45 ppi), 26 pores/cm (65 ppi) and 32 pores/cm (80 ppi) and various foam thicknesses from about 3 to 50 mm ($\frac{1}{8}$ inch to 2 inches).

Figure 6 is a graph of peripheral speed of foam in m/min (ft./min) versus foam thickness in cm (in) and illustrates minimum flow resistances for foam of about 18, 26 and 32 pores/cm, resp. (45 ppi, 65 ppi, and 80 ppi, resp.).

Figures 7a, 7b, 7c show qualitatively the apparent total volume flow for about 18, 26 and 32 pores/cm (45 ppi, 65 ppi and 80 ppi) foam media, respectively, when used with the Figure 2 apparatus which includes an expressing couch roll.

Detailed description of the illustrated embodiment

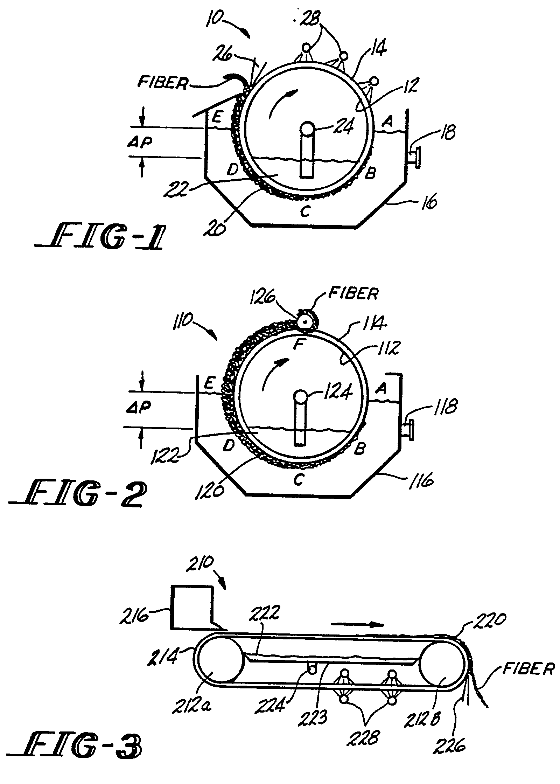

Figures 1 to 3 illustrate foam media separation devices or filters for use on a pulp or paper process stream. The devices can advantageously be utilized to reclaim and thicken fiber in dilute streams with occasional high fiber loading in a manner to be described hereinafter. Like numerals identify like parts and elements in the various views.

The separation and thickening device 10 of Figure 1 includes a rotary drum 12 having a thin layer of open cell resilient hydrophobic foam 14 in a thickness range of from about 3 to 50 mm ($\frac{1}{8}$ inch to 2 inches), preferably approximately 25 mm (1 inch), and a porosity in the range of from about 16 to 32 pores/cm (40 to 80 pores per lineal inch), preferably in the range from 26 to 32 pores/cm (65 ppi to 80 ppi). Other characteristics of the foam are as described in EP—A—0 041 251 and 0 044 566 (U.S. Patent Nos. 4,303,533 and 4,310,424).

The feed stream or pulp slurry is a normally dilute aqueous solution of cellulosic pulp which routinely flows from the pulpmaking or papermaking processes and which contains small amounts of desirable fiber and small contaminants and small undesirable fiber parts except during occasional periods when high fiber loads from upstream catastrophic failures are present. The feed stream is introduced into a tank 16 containing the rotary drum 12 by means of inlet pipe 18. The stream is filtered as it passes through the foam 14, leaving the majority of the larger desirable fiber 20 on the foam surface. The foam passes the majority of the contaminants and small fiber parts with the liquid filtrate 22 which flows from the drum interior through outlet pipe 24. The difference in height between the outer liquid level in tank 16 and the inner liquid level of filtrate 22 produces a pressure differential ΔP. The drum type separation device of Figure 1 is provided with any conventional retrieval device such as a doctor 26 or an air knife or vacuum takeaway which removes the fiber mat from the foam surface. Showers 28 can be used to clean the foam surface, if desired.

In comparison with other drum filters, the separation device of Figure 1 offers the following advantages:

1. Significantly higher area flow rates of the nature of about 600 to 1200 l/m²/min (15 to 30 gal./ft.²/min) compared to the about 400 to 800 l/m²/min (10 to 20 gal./ft.²/min) achievable with a standard or typical gravity decker or vacuum thickener;

2. Higher fiber consistencies of the nature of 12 to 18 percent compared to 12 percent maximum obtained with typical deckers or thickeners.

These advantages are believed to result for reasons to follow. Various points on the periphery of the foam media 14 of drum 12 in Figure 1 are labelled A through E. From points A to B in Figure 1, capillary action resulting from the foam's cellular structure and gross driving forces due to the pressure differential combine to begin filtration and disposition of desirable fiber on the foam surface. From B to C filtration continues, though at a declining rate as the fiber thickens on the surface to a higher consistency and its resistance to flow increases. From C to D, filtration continues at a lower rate. From D to E, the macroscopic and capillary ΔP again combine to aid in dewatering the fiber mat and maintain its integrity at the foam's surface. Between E and F, capillary action alone is responsible for water removal from the fiber mat. These forces are analyzed in the middle column of Figure 4 where they are compared to a typical wire covered gravity decker in the column to the far right in Figure 4.

The unique aspects of the foam separator or thickener of the invention can thus be noted as stated below.

The capillary action associated with the foam's structure does not exist to any appreciable extent in the wire covered thickener. This lack of capillary driving forces in the wire adversely affects the total driving force throughout the process and thus reduces the capability for high flow rate.

The inherent resistance to flow of the typical thickener wire is higher than that of the foam within the disclosed porosity and thickness ranges, and these ranges due to their prosity and their void volume provide increased fluid takeaway and driving force throughout the process over that obtained in wire covered thickeners.

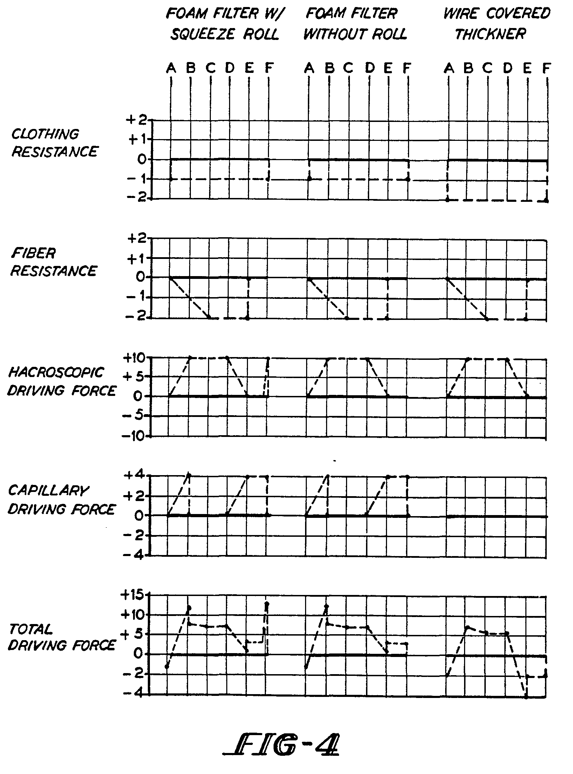

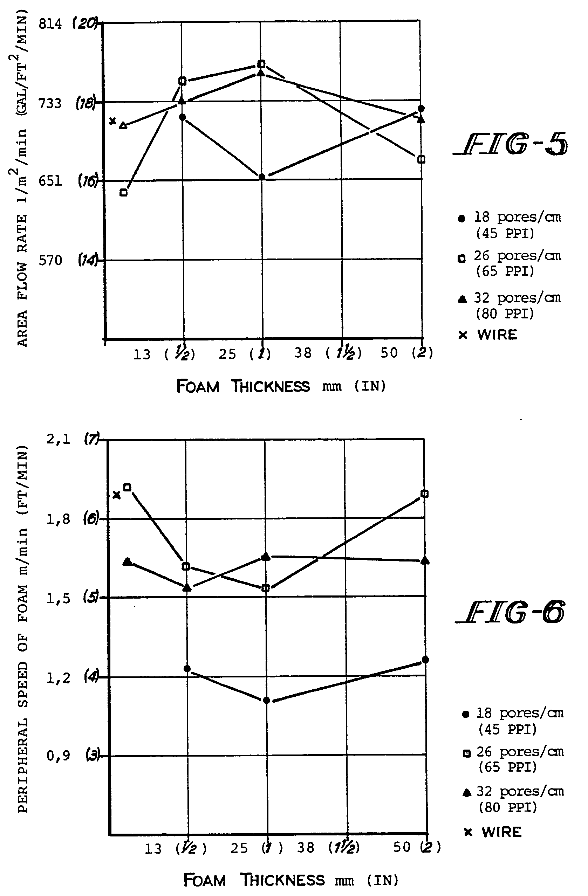

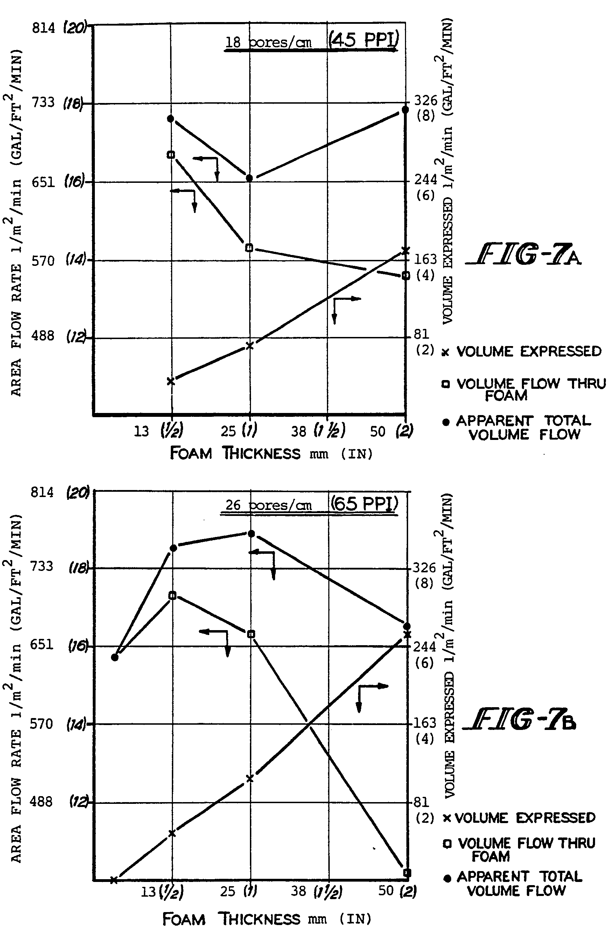

The separation device 110 of Figure 2 includes a couch roll 126 which removes the fiber mat and which squeezes the foam 114 down to within approximately 3 mm ($\frac{1}{8}$ inch) of the drum 112 at peripheral location F. The separation device 110 thus has a macroscopic driving force at point F which adds to the total driving force and results in the expression of filtrate 122 through the foam. The qualitative comparison of separation device 110 to separation device 10 and to a typical wire covered gravity can be made by comparing the first column in Figure 4 with the other columns.

Since the wire has no compressibility as compared to the foam, the impact of the pressurized couch roll is significantly less if it were to be used with wire in a typical wire covered pulp dewatering device. The removal of water from the foam structure by compression at point F frees a high volume of foam for additional water removal, this does not occur with the wire covering. Therefore, the consistency of the fiber will be higher with the Figure 2 foam thickener.

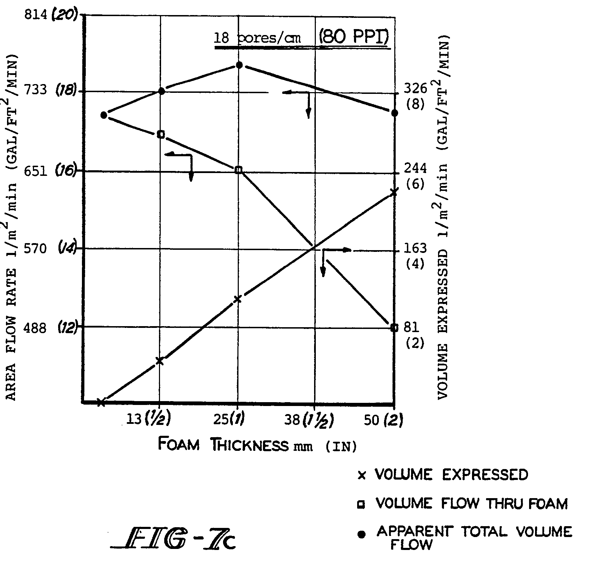

Figure 3 illustrates a foam belt filter 210, and embodiment which utilizes a foam separation medium

4

214 having the proper porosity and thickness rotationally driven about rotating members 212a and 212b. The schematic drawing of device 210 shows that a feed stream tank 216 deposits a feed stream on foam belt 214 and a vacuum draws filtrate 222 into a reservoir 223 for removal through outlet pipe 224. The fiber mat 220 is retrieved by a doctor 226 from the surface of belt 214. Showers 228 may be provided to clean the belt surface after retrieval.

Foam parameters which include the effective range of thickness and porosity are shown in Figure 5 to give the various apparent area flow rates in $l/m^2/min$ (gal./ft.$^2$/min. or GFM) for a Figure 2 type of device. These show that a porosity in excess of about 26 pores/cm (65 ppi) gives greater expected flow rates than at about 16 or 18 pores/cm (40 to 45 ppi) foam.

Moreover, it has been found in this situation that fiber consistency increases with increasing thickness and decreasing pore sizes. The increase in consistency with greater thickness is believed, at least in part, to be a function of the increased capillarity and cell volume available for water transfer.

The analysis of area flow rate versus foam thickness indicates that a maximum area flow rate exists at approximately 25 mm (one inch) thickness. This maximum is also seen in Figure 6 when evaluating peripheral speed of a drum type foam separating device required to reach a given flow rate versus foam thickness. Since a reduced peripheral speed is equivalent to a lower resistance to flow, the least resistance is present in the about 25 mm (one inch) foam.

Additionally, the lowest resistance in Figure 6 is seen with the coarsest foam, about 18 pores/cm (45 ppi). There appears to be no real trend between the about 26 and 32 pores/cm (65 and 80 ppi) foam. It should be noted that the about 18 pore/cm (45 ppi) foams used in this analysis were from a "softer" formulation than the about 26 and 32 pores/cm (65 and 80 ppi) foams, which were somewhat stiffer.

Figures 7a, 7b and 7c are prepared from data developed on a Figure 2 device which included a couch roll for retrieval. It is believed other retrieval methods which remove fiber from the foam would show qualitatively similar results. Theoretically, one would expect the highest flow rates, or lowest resistances, to occur with the thinnest foams due to the lower inherent resistance. This is, in fact, true in the Figure 2 system but the impact is masked by the volume of liquid which is introduced by expression with the couch roll 126. Figure 7c depicts the process for about 32 pores/cm (80 ppi) foam, as an example. The apparent volumetric flow is the actual filtrate flow per unit area removed from the filter each minute. The volume expressed is the calculated volume of liquid forces out of the foam by the retrieval means, i.e., couch roll 126, each minute. Therefore, the actual volumetric flow through the foam is the difference between the apparent flow and the expressed flow. As can be seen in Figure 7c, the actual volumetric flow through the foam does decrease with increasing thickness, as expected. These results suggest that continued removal of liquid from the foam increases both the volumetric flow out of the system and the maximum fiber consistency which can be obtained.

## Table I

Dilute Softwood Pulp Aqueous Suspension

(pH: Approx. 10—11; Temp.: Approx. 34—41°C (94°—106°F) TSS = ppm    ppcm = pores/cm

| Separation Medium | l/min (GPM) | $1/m^2/min$ (GFM) | RPM | m/min (Ft./Min.) | Feed TSS | Filtrate TSS | % Fiber Consist. |
|---|---|---|---|---|---|---|---|
| 13mm 18ppcm (1/2" 45ppi) | 155 (41) | 716 (17.6) | 1,2 | 1,22 (4.08) | 412 | 51 | 11.1 |
| 25mm 18ppcm (1"  45ppi) | 155 (41) | 655 (16.1) | 1.0 | 1,10 (3.67) | 340 | 1 | 11.9 |
| 50mm 18ppcm (2"  45ppi) | 167 (44) | 724 (17.8) | 1.0 | 1,26 (4.19) | 408 | 63 | 14.3 |
| 3mm 26ppcm (1/8" 65ppi) | 151 (40) | 639 (15.7) | 2.0 | 1,92 (6.41) | 381 | 69 | 13.2 |
| 13mm 26ppcm (1/2" 65ppi) | 155 (41) | 753 (18.5) | 1.6 | 1,63 (5.44) | 474 | 59 | 13.6 |
| 25mm 26ppcm (1"  65ppi) | 155 (41) | 769 (18.9) | 1.4 | 1,54 (5.13) | 370 | 74 | 14.9 |
| 50mm 26ppcm (2"  65ppi) | 163 (43) | 672 (16.5) | 1.5 | 1,88 (6.28) | 558 | 15 | 17.0 |
| 3mm 32ppcm (1/8" 80ppi) | 159 (42) | 708 (17.4) | 1.7 | 1,64 (5.45) | 625 | 92 | 12.7 |
| 13mm 32ppcm (1/2" 80ppi) | 151 (40) | 733 (18.0) | 1.5 | 1,53 (5.10) | 539 | 96 | 14.9 |
| 25mm 32ppcm (1"  80ppi) | 167 (44) | 761 (18.7) | 1.5 | 1,65 (5.50) | 531 | 19 | 15.6 |
| 50mm 32ppcm (2"  80ppi) | 167 (44) | 712 (17.5) | 1.3 | 1,64 (5.45) | 595 | 30 | 18.0 |
| Fourdrinier Wire | 159 (42) | 712 (17.5) | 2.0 | 1,88 (6.28) | 611 | -- | 14.5 |

Table I shows typical values obtained from various foam separation media of a Figure 2 device. The foam porosities ranged from about 18 to 32 pores/cm (45 to 80 ppi) and the thickness from about 3 to 50 mm (⅛ inch to 2 inches). Fourdrinier wire, which is much more expensive to use and which has greater takeaway and retrieval problems than foam, is also shown. The feed stream for this table was made up using softwood fiber in an aqueous suspension with a pH in the range of approximately 10 to 11.4 and a temperature of approximately 34 to 41°C (94° to 106°F). The "l/min" (GPM) column is liters per minute (gallons per minute); "l/m²/min" (GFM) is liters per square meter per minute (gallons per square foot per minute); "RPM" is revolutions per minute of the drum; "m/min" (ft./min) is peripheral speed in meters per minute (feet per minute); "Feed TSS" is the feed stream total suspended solids in parts per million (ppm); "Filtrate TSS" is in parts per million (ppm); and, "% Fiber Consist" is in parts per million (ppm); and "% Fiber Consist" is of the recovered fiber from the medium surface (1% equals 10,000 ppm). The vacuum for Tables I, II and III, and IV was approximately 18 to 23 cm (7 to 9 inches) (water).

Feed stream differences are because the material was drawn from the made up stock at different times with different settling and other factors having occurred and the instantaneous samples taken may have been of an insufficient number to give a true average.

## Table II

Main Pulp Mill Process Sewer of 502 to 898 ppm Fiber (pH: Approx. 10.4—10.8)

Temp: Approx. 37°C (99° F)  TSS=ppm    ppcm=pores/cm

| Separation Medium | 1/min (GPM) | $1/m^2/min$ (GFM) | RPM | m/min (Ft./Min.) | Feed TSS | Filtrate TSS | % Fiber Consist. |
|---|---|---|---|---|---|---|---|
| 25mm 24ppcm (1" 60ppi) | 76 (20) | 427 (10.5) | 2.4 | 2,65 (8.82) | 813 | 65 | 10.6 |
| 50mm 16ppcm (2" 40ppi) | 95 (25) | 387 (9.5) | 1.0 | 1,26 (4.19) | 521 | 60 | 10.3 |

## Table III

Alkaline Bleach Sewer of 286 to 336 ppm Fiber (pH: Approx. 11.2—11.5)

Temp.: Approx. 45°C (113° F)  TSS = ppm    ppcm = pores/cm

| Separation Medium | 1/min (GPM) | $1/m^2/min$ (GFM) | RPM | m/min (Ft./Min.) | Feed TSS | Filtrate TSS | % Fiber Consist. |
|---|---|---|---|---|---|---|---|
| 50mm 24ppcm (2" 60ppi) | 95 (25) | 387 (9.5) | .7 | 0,89 (2.93) | 286 | 22 | 10.6 |
| 25mm 16ppcm (1" 40ppi) | 95 (25) | 427 (10.5) | .3 | 0,38 (1.26) | 336 | 0 | 7.9 |

The actual recovered fiber from the pulp mill sewer stream of Table II had the following analysis:

|  | RUN | |
| --- | --- | --- |
|  | 25 mm 24 ppcm (1" 60 ppi) | 50 mm 16 ppcm (2" 40 ppi) |
| Fiber Content: | | |
| % Hardwood | 31 | NA |
| % Softwood | 69 | NA |
| Freeness: | 688 | 744 |
| Viscosity: | 40.0 | 30.3 |
| Permanganate No.: | 21.3 | 19.2 |
| Fiber Length: | | |
| % + 20: | 57.4 | 41.6 |
| % + 35: | 20.3 | 22.4 |
| % + 65: | 10.3 | 14.0 |
| % + 150: | 3.1 | 5.8 |
| % − 150: | 8.9 | 16.2 |

The actual recovered fiber from the bleach plant sewer stream of Table III had the following analysis:

|  | BOTH RUNS |
| --- | --- |
| Fiber Content: | |
| % Hardwood | 93 |
| % Softwood | 7 |
| Freeness: | 637 |
| Viscosity: | 25.6 |
| Brightness: | 56 |
| Permanganate No.: | 2.1 |
| Fiber Length: | |
| % + 20: | 3.2 |
| % + 35: | 38.8 |
| % + 65: | 24.3 |
| % + 150: | 7.4 |
| % − 150: | 26.3 |

Subsequent to the preparation of the Table I, II and III data for this specification, it was determined through recalibration of the flow meter that the flow rate l/min and $l/m^2/min$ (GPM and GFM) data represented in Table I, II and III and Figures 5, 6, 7a, 7b and 7c were understated by 37%. This in no way changes the results or conclusions contained in this specification, but rather enhances the effectiveness of the separation method.

<div align="center">Table IV</div>

Alkaline Bleach Sewer of 178 to 374 ppm Fiber
(pH: Approx. 10.3; Tamp: Approx. 48°C (119° F); RPM: 2.5; m/min: 2,76 (Ft./Min.: 9.2)

| Separation Medium | Time (h) | l/min (GPM) | $l/m^2/min$ (GFM) | Feed TSS | Filtrate TSS | % Fiber Consist. |
|---|---|---|---|---|---|---|
| 25mm 26ppcm (1" 65ppi) | 1.5 | 233 (59) | 1083 (26.6) | 360 | 32 | 1.2 |
| | 42 | 238 (63) | 1136 (27.9) | 294 | 80 | 1.5 |
| | 98 | 235 (62) | 1127 (27.4) | 178 | 8 | 0.5 |
| | 115 | 235 (62) | 1127 (27.4) | 374 | 76 | 1.1 |
| | 140 | 261 (69) | 1241 (30.5) | 312 | 26 | 0.6 |

The experimental results which are presented in Table IV were obtained principally to demonstrate time consistency of the system at high flow rates and efficent suspended solids removal. The fiber consistency was not controlled to obtain high levels in these experiments.

EP 0 148 382 B1

# EP 0 148 382 B1

Recovery of suspended solids from the pulp mill bleach plant sewer systems of Tables II, III and IV using the foam filter typically exceeds 90%, including substantially 100% of the desirable long fiber. This is significant because these streams typically handle between 6.7 and 20.5 tons of fiber per day. Recovered fiber consistencies were good and analysis of the recovered fiber, including freeness, viscosity, permanganate number, and fiber length, were all in the normal range of desirable long fiber.

## Claims

1. A method of treating a stream of waste water from pulp making or paper making processes which contains fiber in excess of 178 ppm suspended therein to improve pulp consistency and retrieve desirable fiber, which includes raising volumetric flow of the suspension through an open cell hydrophobic foam separation medium to effect maximum mechanical separation of desirable fiber from the suspension and from small contaminants and undesirable fiber parts therein while lowering hydraulic electrostatic attachment to the separation medium of the small contaminants and undesirable fiber parts, said method comprising:

providing a single layer of an open cell hydrophobic foam separation medium upon a drum or an endless belt rotating at a peripheral speed no faster than about 2,85 m (9.5 ft) per minute, said layer having a thickness of from 3 to 50 mm and a porosity within the range of 16 to 35 pores/cm,

subjecting said foam separating medium to a pressure differential and to a stream of said waste water thereby creating a flow of aqueous suspension including any small contaminants and undesirable fiber parts into and through said medium and a mat of desirable fiber on the surface of said medium, and retrieving said desirable fiber from the surface of said medium.

2. The method of claim 1, in which the foam thickness is between 12 and 50 mm.

3. The method of claim 1 in which the foam thickness is substantially 25 mm.

4. The method of claim 1 in which the retrieving is performed by means including a couch roll.

5. The method of claim 1 in which the pressure differential is created by the foam medium mounted on the drum within a feed stream.

6. The method of claim 1 in which the foam medium is a rotating fiber belt.

7. The method of claims 1 to 6, said method comprising:

subjecting a portion of a rotating endless compressible hydrophobic open cell foam separation medium to a stream of said waste water under pressure, removing said separating medium portion from said stream,

expressing said aqueous suspension including small contaminants and undesirable fiber parts which remain in the separating medium through said medium as expressate,

contining to subject additional portions of said foam separation medium to said stream under pressure while continually removing and compressing other medium portions and retrieving desirable fiber.

## Patentansprüche

1. Verfahren zur Behandlung eines Abwasserstroms aus Pulpe- oder Papierherstellungsprozessen, der mehr als 178 ppm darin suspendierte Fasern enthält, um die Pulpenkonsistenz zu verbessern und erwünschte Fasern zu erfassen, wobei der volumetrische Fluß der Suspension durch ein aus offenzelligem hydrophobem Schaum bestehendes Abtrennmedium erhöht wird, um eine maximale mechanische Abtrennung erwünschter Fasern von der Suspension und von kleinen Verunreinigungen und darin vorliegenden unerwünschten Faserteilen zu erzielen, während die hydraulische elektrostatische Haftung der kleinen Verunreinigungen und unerwünschten Faserteile an das Abtrennmedium erniedrigt wird, dadurch gekennzeichnet, daß: ,

eine Einzelschicht eines aus einem offenzelligen hydrophoben Schaum bestehenden Abtrennmediums auf einer Trommel oder einem Endlosband, die mit einer Umfangsgeschwindigkeit von nicht schneller als etwa 2,85 m (9,5 ft) pro Minute rotieren, aufgebracht wird, wobei die Schicht eine Dicke von 3 bis 50 mm und eine Porosität innerhalb des Bereich von 16 bis 32 Poren/cm aufweist,

das Schaumbtrennmedium einem Druckdifferential und einem Strom des Abwassers unterworfen wird, wodurch ein Fluß von wässriger Suspension einschließlich vorhandener kleiner Verunreinigungen und unerwünschter Faserteile in das un durch das Medium und eine Matte aus erwünschter Faser an der Oberfläche des Mediums erzeugt wird, und diese erwünschten Fasern von der Oberfläche des Mediums wiedergewonnen werden.

2. Verfahren nach Anspruch 1, bei dem die Schaumdicke zwischen 12 und 50 mm beträgt.

3. Verfahren nach Anspruch 1, bei dem die Schaumdicke im wesentlichen 25 mm beträgt.

4. Verfahren nach Anspruch 1, bei dem die Wiedergewinnung mit Hilfe einer eine Gautschwalze aufweisenden Vorrichtung bewirkt wird.

5. Verfahren nach Anspruch 1, bei dem das Druckdifferential durch das auf der Trommel montierte Schaummedium innerhalb eines Beschickungsstroms erzeugt wird.

6. Verfahren nach Anspruch 1, bei dem das Schaummedium ein rotierendes Filterband ist.

7. Verfahren nach Ansprüchen 1 bis 6, bei dem:

12

ein Teil eines rotierenden, endlosen, zusammenpreßbaren, aus hydrophobem offenzelligem Schaum bestehenden Abtrennmediums einem Strom des Abwassers unter Druck ausgesetzt wird,

dieser Abtrennmediumsteil von dem Strom entfernt wird, die wässrige Suspension einschließlich kleiner Veruneinigungen und unerwünschter Faserteile, die im Abtrennmedium verbleiben, durch das Medium als Auspreßmaterial ausgedrückt wird,

zusätzliche Teile des Schaumabtrennmediums dem Strom unter Druck weiterhin ausgesetzt werden, während kontinuierlich andere Mediumsteile entfernt und zusammengepreßt und erwünschte Fasern wiedergewonnen werden.

## Revendications

1. Procédé de traitement d'un courant d'effluent aqueux provenant de processus de fabrication de pâte à papier ou de papier qui contient plus de 178 ppm de fibres en suspension pour améliorer la consistance de la pâte et récupérer des fibres utilisables, comprenant, l'augmentation du débit volumétrique de la suspension à travers un milieu de séparation en mousse hydrophobe à alvéoles ouvertes pour effectuer un séparation mécanique maximale des fibres utilisables de la suspension et de petits produits de contamination ainsi que de parties de fibres indésirables, tout en abaissant la fixation électrostatique hydraulique au milieu de séparation des petits produits de contamination et des parties de fibres indésirables, ledit procédé comportant:

l'apport d'une unique couche d'un milieu de séparation en mousse hydrophobe à alvéoles ouvertes sur un tambour ou une courroie sans fin tournant à une vitesse circonférentielle non supérieure à environ 2,85 m par minute, ladite couche possédant une épaisseur comprise entre 3 et 50 mm et une porosité comprise entre 16 et 32 pores/cm,

l'application aduit milieu de séparation en mousse d'un différentiel de pression et d'un courant dudit effluent liquide, en créant ainsi un écoulement d'une suspension aqueuse comprenant des petits produits de contamination et des parties de fibres indésirables dans et à travers ledit milieu et un mat de fibres utilisables sur la surface dudit milieu, et la récupération desdites fibres utilisables de la surface dudit milieu.

2. Procédé selon la revendication 1, dans lequel l'épaisseur de la mousse est comprise entre 12 et 50 mm.

3. Procédé selon la revendication 1, dans lequel l'épaisseur de la mousse est sensiblement de 25 mm.

4. Procédé selon la revendication 1, dans lequel la récupération est effectuée par des moyens comprenant un rouleau d'expression.

5. Procédé selon la revendication 1, dans lequel le différentiel de pression est créé par le milieu en mousse monté sur le tambour à l'intérieur d'un flux d'alimentation.

6. Procédé selon la revendication 1, dans lequel le milieu en mousse est un tamis de filtrage rotatif.

7. Procédé selon l'une quelconque des revendications 1 à 6, caractérisé en ce qu'il comporte:

l'application à une partie du milieu de séparation en mousse hydrophobe à alvéoles ouvertes compressible sans fin d'un courant dudit effluent liquide sous pression,

l'extraction de ladite partie du milieu de séparation dudit courant,

l'expression de ladite suspension aqueuse comprenant de petits produits de contamination et des parties de fibres indésirables qui demeurent dans le milieu de séparation à travers ledit milieu lorsqu'il est exprimé,

la continuation de l'application de parties supplémentaires dudit milieu de séparation en mousse audit courant sous pression tout en retirant et en comprimant continuellement d'autres parties du milieu et en récupérant les fibres utilisables.

FIG-1

FIG-2

FIG-3

FOAM FILTER W/ SQUEEZE ROLL　　FOAM FILTER WITHOUT ROLL　　WIRE COVERED THICKNER

A B C D E F　　A B C D E F　　A B C D E F

CLOTHING RESISTANCE

FIBER RESISTANCE

HACROSCOPIC DRIVING FORCE

CAPILLARY DRIVING FORCE

TOTAL DRIVING FORCE

FIG-4

2

FIG-5

AREA FLOW RATE 1/m²/min (GAL/FT²/MIN)

FOAM THICKNESS mm (IN)

- 18 pores/cm (45 PPI)
- 26 pores/cm (65 PPI)
- 32 pores/cm (80 PPI)
- × WIRE

FIG-6

PERIPHERAL SPEED OF FOAM m/min (FT/MIN)

FOAM THICKNESS mm (IN)

- 18 pores/cm (45 PPI)
- 26 pores/cm (65 PPI)
- 32 pores/cm (80 PPI)
- × WIRE

EP 0 148 382 B1

FIG-7A

FIG-7B

FIG - 7c

x VOLUME EXPRESSED

◻ VOLUME FLOW THRU FOAM

● APPARENT TOTAL VOLUME FLOW